# EUROPEAN PATENT SPECIFICATION

(11) **EP 4 096 934 B1**
(45) Date of publication and mention of the grant of the patent: **01.07.2026**
(21) Application number: 21703080.8
(22) Date of filing: 29.01.2021
(51) Int. Cl.: B60B 21/02

(54) **A RIM FOR A VEHICLE WHEEL AND VEHICLE WHEEL HEREWITH**
FELGE FÜR EIN FAHRZEUGRAD UND FAHRZEUGRAD DAMIT
JANTE POUR ROUE DE VÉHICULE ET ROUE DE VÉHICULE DOTÉE DE CELLE-CI

(30) Priority: 30.01.2020 DE 202020100517 U
(43) Date of publication of application: 07.12.2022
(73) Proprietor: Maxion Wheels Holding GmbH, 53639 Königswinter (DE)
(72) Inventor: RODE, Karl, 53639 Königswinter (DE); STELZER, Günter, 53604 Bad Honnef (DE); ZEYEN, Klaus Bernhard, 53560 Vettelschoß (DE)
(74) Representative: Patentanwälte Buschhoff Hennicke Althaus
(86) International application number: PCT/IB2021/050702
(87) International publication number: WO 2021/152521

(56) References cited:
- JP-B2- 6 312 415
- US-A- 4 940 069
- US-A1- 2004 124 695
- US-B1- 6 474 385

## Description

The invention relates to a rim for a vehicle wheel, with an inner rim flange and an outer rim flange, an inner rim shoulder and an outer rim shoulder as well as a rim well with a well base, an inner well flank and an outer well flank between the rim shoulders, with a transition section adjoining the inner well flank and with an inner hump with a hump peak between the transition section and the inner rim shoulder, which are rotationally symmetrical around a wheel axis, and with a specific material thickness in the area of the transition section. The invention further relates to a vehicle wheel, having a metallic rim with an inner rim flange and an outer rim flange, an inner rim shoulder and an outer rim shoulder and a rim well with a well base, an inner well flank and an outer well flank between the rim shoulders, with a transition section adjoining the inner well flank, with an inner hump with a hump peak between the transition section and the inner rim shoulder, which are rotationally symmetrical around a wheel axis, and with a material thickness in the area of the transition section, and having a metallic wheel disk arranged inside the rim, connected to the rim, which disk has a hub connection flange with several bolt holes arranged on a hole circle around a wheel axle, a transition area provided with ventilation holes and a disk edge, wherein the hub connection flange, the transition area and the outer rim flange form a wheel front side.

Vehicles for road traffic need and comprise, regardless of their structure, their intended use and their type of drive with combustion or electric motor, several complete wheels (tire and wheel assembly), via which the vehicle weight is supported relative to the ground and the power transmission of the engine interacts with the ground. Each complete wheel is composed of a generally metallic vehicle wheel, consisting of a rim and wheel disk, as well as a generally tubeless tire supported by the rim and made of a suitable rubber compound. Both in vehicles with internal combustion engines and in vehicles with electric motors, efforts have long been made to minimize the weight caused by the metallic part of the vehicle wheels as much as possible; at the same time, however, care must be taken to ensure that the vehicle wheel offers the best possible driving dynamic properties and, at the same time, develops a low level of noise. However, weight reductions have their limits not only due to the material properties of the steels or light metal alloys used for the vehicle wheels, but also due to the necessary vehicle wheel geometry, which in larger or heavier vehicles and increasing comfort and safety requirements for vehicles lead to larger wheel diameters and larger rim widths.

By means of modernized manufacturing methods such as e.g. flow-forming for manufacturing the rims, the dead weight of a vehicle wheel with a comparable vehicle wheel geometry can be reduced, but at the same time the inherent rigidity of the vehicle wheel decreases, which in particular can also lead to an impact on the natural angular frequency and consequently lead to vibrations during driving, which not only limit the service life of a vehicle wheel but, in very unfavorable cases, can also lead to violent fractures on vehicle wheels. At the same time, unfavorable natural angular frequencies can contribute to increased noise generation caused by these vehicle wheels.

From DE 20 2015 101 746 U1, a rim for a vehicle is known, which has a hump both axially on the inside and axially on the outside in front of the rim flanges, whereby, for increasing the rigidity and maintaining the desired NVH properties (Noise, Vibration, Harshness) on the well, different part sections are created, which are radially offset from one another.

From EP 0 780 244 A2, a rim for a vehicle wheel is known, in which sections on the inner well flank and in the transition section to the rim shoulder having the inner hump receive a lower material strength compared to the material strength, for example in the well base. The areas with reduced material strength comprise stiffening beads, which extend essentially perpendicular to the circumferential direction of the rim, in order to increase the rigidity. By flow-spinning during manufacture, the rim may obtain the different material strengths, and can be fully profiled before the stiffening beads are formed by an additional manufacturing step, for example a forming pressing process.

US patent US 4 940 069 A discloses a wheel with a rim having rim flanges and bead seats on each side of the rim well; the rim shall furthermore comprise on both bead seats a hump as well as a circumferentially extending groove with a round peak between the hump and the rim well, which groove shall fit with the inner diameter of the hump and the protrusion of the tire beat toe to better the mounting of run-flat tires and to avoid problems caused by sharp cornering operations of a tire handler during tire mounting.

JP 6 312415 B2 discloses a wheel with a rim, the rim having an inner ledge and on outer ledge between the rim well and the bead seat. A transition portion is continuing the inner rim well flank towards the inner bead seat, and a radially offset wall section formed by a groove with a rounded peak projecting radially inwards is provided between the transition section and the inner ledge and/or between the bead seat and the inner rim flange. The groove shall serve as a reinforcing portion. The groove being provided between the rim flange and the beat seat may have zero width with walls contacting each other, while the groove portion between ledge and transition portion shall match and he continues with the ledge portion.

US 6474385 B1 discloses a wheel with a wheel rim having a cambered portion for selective reinforcement of the rim between the rim flank of the rim well and a transition portion merging into a ledge.

US 2004/124695 A1 discloses a rim produced by reverse flow forming to receive a rim with a high degree of lightening while retaining an acceptable fatigue strength by different thicknesses in different areas.

The object of the invention is to create vehicle wheels, preferably for passenger vehicles (passenger cars) or off-road vehicles such as SUVs, but also, with respect to the construction principle, for commercial vehicles such as trucks, construction vehicles, trailer vehicles or agricultural vehicles, which are improved in terms of weight minimization and noise development and which can fulfill the existing specifications for vehicle wheels through standards such as ETRTO, TRA or JATMA, which have a higher inherent rigidity and possibly a longer service life and at the same time show a lower risk of susceptibility to vibration.

This object is solved by the invention according to claim 1; the subclaims disclose preferred embodiments. The transition section of a rim of a vehicle wheel according to the invention comprises at least one rotationally symmetrical stiffening section with a radially offset wall section, wherein the maximum radial offset of the wall section to the adjacent area of the transition section is greater than the said material thickness in the area of the transitional section, and wherein the stiffening section has a diameter over its entire axial extension which is equal to or greater than the diameter at the well base and smaller than the diameter of the hump peak of the hump.

The rims according to the invention receive a stiffening section which does not run in the axial direction as in the prior art, but actually in the circumferential direction, and thereby perpendicular to the wheel axis. The diameter of the hump peak of the hump forms the outer limit area for the stiffening section(s), and the offset by more than the material thickness results in a significant increase in the rigidity or inherent rigidity of the rim, with which the loss of stiffness due to material thickness reductions is compensated. With the measures according to the invention, the discrete natural angular frequencies of the rim are increased and thereby significantly positively influenced; at the same time, the at least one stiffening section or the several stiffening sections minimize the susceptibility of the vehicle wheel to a sagging of the inner rim flange, which is often the cause of material breakages on vehicle wheels with flow-formed rims. The measures according to the invention therefore also ensure an increase in the service life.

The solution according to the invention is suitable for vehicle wheels with steel rims as well as for vehicle wheels with light metal rims. It is an additional advantage that the rims with stiffening sections according to concept of the invention can be manufactured entirely by flow-forming the rims without the need for other (additional) manufacturing steps like e.g., pressing processes following the profiling of the rim. It is most advantageous to introduce the stiffening section(s) in one of the profiling steps, needed or provided anyway during the manufacture of the rim, without a rim preform having to be spanned or processed with another machine. The necessary prerequisites for this can then already be present or achieved in the rim preform or, if necessary, can be created in an earlier profiling step. The integral formation of the stiffening sections without an additional manufacturing step is ideal.

According to the invention, the stiffening section forms a box profile with an inner offset section, an outer offset section and an intermediate section. The intermediate section extends in a straight line between the two offset sections; according to one possible embodiment, the intermediate section can then run axially parallel to the wheel axis over its entire axial length. In this variant, the radial offset of the intermediate section can in principle be 2 to 15 times as great as the wall thickness in the transition section; preferably the radial offset of the intermediate section is approximately 3 to 8 times as great as the wall thickness in the transition section.

However, at least one stiffening section with a box profile could also be provided, the intermediate section of which then advantageously runs at an angle to the wheel axis; according to a variant, it would be possible for the angle to change over the axial length of the intermediate section; the intermediate section could also have a corrugated shape or a profile with several turning points; according to one configuration, the intermediate section can run in a straight line and at an angle to the wheel axis, whereby the radial offset of the intermediate section changes relative to other sections of the transition section between the offset sections. In order to achieve sufficient additional stiffening of the rim by means of the stiffening section, it is preferred here that the radial offset of the intermediate section is, at least partially, at least 2 to 15 times, preferably 3 to 8 times, as great as the wall thickness in the transition section. Especially in an embodiment with a straight intermediate section, it is particularly advantageous if the radial offset along the entire axial extension of the intermediate section is 2 to 15 times, preferably 3 to 8 times, as great as the wall thickness in the transition section.

In embodiments with an inner and an outer offset section and an intermediate section lying in-between, the intermediate section can either be located radially further inside than the remaining section of the transition section, or the intermediate section can be located radially further outside than the remaining area of the transition section; in the case of several box profile-shaped stiffening sections, an intermediate section can also be located radially further inside and another intermediate section radially further outside. If necessary, the intermediate section can additionally have an axial length which is smaller than the axial distance between the hump peak and a transition point between the intermediate section and the inner offset section. The aforementioned features, alone or together, improve the inherent rigidity and increase the natural frequency, whereby the rim width and the rim diameter can also determine the specific final parameters for axial distance and axial length.

Preferably, the stiffening section of a rim according to the invention can have a corrugated curve profile with at least one corrugation peak. If several stiffening sections are provided, it is in particular possible that both a stiffening section with a corrugated curve profile and a further stiffening section with a box profile are formed on the rim. According to an advantageous configuration of a rim with a stiffening section with a corrugated curve profile, at least one corrugation peak is formed adjacent to the hump; in this embodiment, the corrugation peak can directly merge into a hump flank, preferably with a peak flank.

Preferably, at least one corrugation peak can also be spaced from the hump and positioned between the stiffening section formed by means of the corrugated curve profile and a bridging section merging into the hump. In this variant, it is particularly advantageous if the bridging section has essentially the same diameter as the section of the transition section on the well base side, or if the bridging section has a greater diameter than the area of the transition section on the well base side.

According to a further variant, at least one corrugation peak can have a radial offset relative to the adjacent areas of the transition section, which is greater than the radial elevation of the hump peak relative to the inner rim shoulder. According to another variant, the stiffening section can have several corrugation peaks, and preferably 3 corrugation peaks, wherein at least one corrugation peak lying closer to the inner rim flange has a smaller radial offset than a corrugation peak lying closer to the well base.

In the embodiments comprising a corrugated curve profile with a corrugation peak, it is particularly advantageous if the radial offset of each corrugation peak relative to a section of the transition section on the well base side is 2 to 15 times as great as the wall thickness in the transition section; it is particularly preferred if the radial offset of each corrugation peak relative to the section on the well base side is 3 times to 8 times as great as the wall thickness in the transition section.

As already explained above, the rim can in particular consist of metal; the rim can consist of light metal and could be manufactured in a casting method and/or by means of forming, or the rim consists of steel and is manufactured almost entirely by cutting/punching and forming, and in particular manufactured by partial flow-forming of a steel blank.

In order to achieve the above object on a vehicle wheel, the vehicle wheel according to the invention is characterized by a rim with at least one or more of the aforementioned features.

Further advantages, configurations, variants and possible embodiments of the invention will be apparent from the following explanation with reference to different advantageous exemplary embodiments shown in the drawing. In the drawing show:
- Fig. 1: schematically a vehicle wheel in longitudinal section useful to understand the invention;
- Fig. 2: the wheel front of the vehicle wheel from Fig. 1;
- **Fig. 3**: a detailed view of the rim profile of the vehicle wheel from Fig. 1;
- **Fig. 4**: schematically a vehicle wheel in longitudinal section not according to the claimed invention;
- **Fig. 5**: the wheel front of the vehicle wheel from Fig. 4;
- **Fig. 6**: a detailed view of the rim profile of the vehicle wheel from Fig. 4;
- **Fig. 7**: schematically a vehicle wheel according to the invention in sectional view along VII-VII in Fig. 8;
- **Fig. 8**: the wheel front of the vehicle wheel from Fig. 7;
- **Fig. 9**: a detailed view of the rim profile of the vehicle wheel from Fig. 7;
- **Fig. 10**: a detailed view of a rim profile of a vehicle wheel according to another inventive variant;
- **Fig. 11**: a detailed view of a rim profile of a vehicle wheel not according to the claimed invention;
- **Fig. 12**: a detailed view of a rim profile of a vehicle wheel not according to the claimed invention; and
- **Fig. 13**: a detailed view of a rim profile of a vehicle wheel according to another inventive embodiment variant.

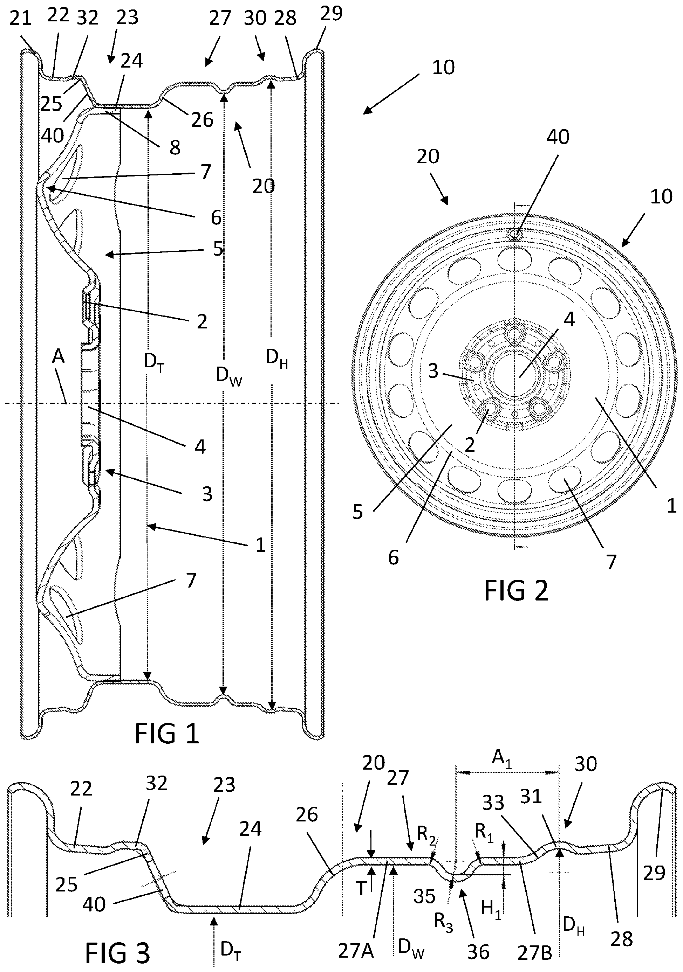

In **Fig. 1** and **Fig. 2****,** a vehicle wheel according to a first embodiment variant is designated by reference numeral 10. The vehicle wheel 10 consists of a rim 20 and a wheel disk 1, which is welded into the interior of the rim 20. The wheel disk 1 has a classic disk structure with a central hub connection flange 3, here having altogether five bolt holes 2 and a central hole 4, with a transition area 5 defining the disk contour and being formed as a stiffening arch 6 having an elevation, and with a disk flange 8 which is oriented essentially parallel to the axis of rotation A of the vehicle wheel 10 and which forms the connection element between the wheel disk 1 and the rim 20. The transition area 5 comprises altogether fourteen circular ventilation holes 7. The ventilation holes 7 are formed in that section of the transition area 5 between the maximum elevation of the stiffening arch 6 and the disk flange 8. The structure of such a wheel disk 1 is known in various configurations with different elevations of the stiffening arch and number of ventilation holes etc. and forms only one exemplary embodiment here.

The structure of the rim 20 is essential for the invention, and reference is now made to Fig. 3 in addition. In a manner known per se, the rim 20, preferably produced by flow-forming from sheet steel or the same diameter; due to the stiffening of the transition section 27 achieved with the corrugated curve 36, the material thickness T in the transition section 27 can be thinned by a shaping method during profiling; nevertheless, the rim 20 of the vehicle wheel 1 retains a sufficiently high inherent rigidity; in addition, the rim 20 may show an increased natural angular frequency due to the stiffening section 35. The height H₁ of the corrugation peak of the corrugated curve 36, that is, the dimension of the bulge of the corrugated curve 36, is more than twice as thick as the material thickness T, as can be se seen form the schematic drawing in FIG. 3. Preferably, the height H₁ of the corrugation peak of the corrugated curve 36 is 3 times thicker than the material thickness T; such values may be achieved in particular if the material thickness T in the area of the transition section is still reduced compared to a material thickness, for example in the rim well. However, the offset height H₁ of the corrugation peak is less than the distance between the corrugated section 27A and the well base 24, because the well base 24 determines the minimum inner diameter of the rim 20. The transition radius R₁ between the section 27A on the well side and the corrugated curve 36 can have the same size as the transition radius R₂ between the corrugated curve 36 and the bridging section 27B; the peak of the corrugated curve 36 can in turn have a radius of curvature R₃ which is equal to or preferably greater than the transition radii R₁ and R₂. If only one corrugated curve 36 as a reinforcement section 35 is present, the peak of the corrugated curve 36 is preferably approximately centrally between the hump peak 31 and the inner well flank 26, even more preferably offset from the center towards the inner rim flange 29.

The connection between the disk flange 8 and the rim 20 on the underside of the rim well 24 preferably takes place via several weld seams or via a friction weld. In the front view of the vehicle wheel 10, as Fig. 1 and 2 clearly show, the wheel disk 1 is almost completely visible with the exception of a partial section of the disk flange 8; of the rim 20, only the outer well flank 25, the outer rim shoulder 22 and the outer rim flange 21 are visible. A valve hole 40 for receiving a valve is formed in the outer well flank 25.

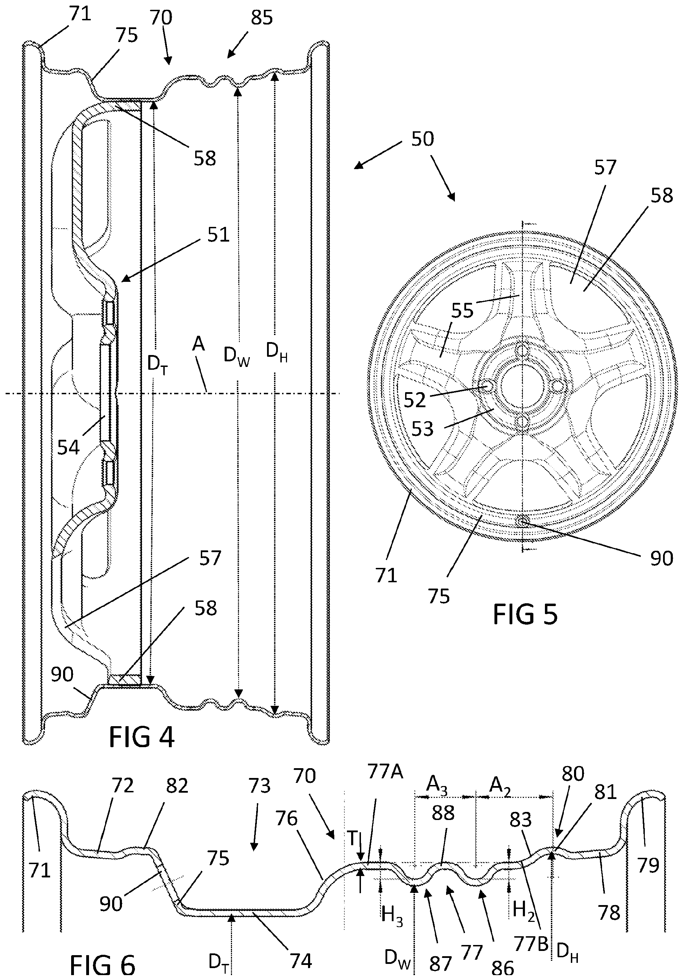

In Fig. 4 and Fig.5, a vehicle wheel according to a second embodiment variant is designated as a whole by reference numeral 50. The vehicle wheel 50 consists of a rim 70 according to a second embodiment variant and a wheel disk or wheel disk 51, which is welded into the interior of the rim 70 as in the previous exemplary embodiment, but is based on a different construction principle for wheel disks and is manufactured as a weight-reduced element with spoke contours. The wheel disk 51 has a central hub connection flange 53, here having five bolt holes 52 and a center hole 54; a number of five spoke arrangements 55 extend between the hub connection flange 53 and a radially outer disk flange 58. The five spoke arrangements 55 form the only connection between the hub connection flange 53 and the disk flange 58. Two adjacent spoke arrangements 55 each delimit one of a total number of five relatively large-area ventilation holes 57. Each spoke arrangement 55 has, in seen transversely to the radial direction, a generally U-profile, in order to ensure sufficient rigidity of the wheel disk 51. In the local extension area of the ventilation holes 57, the disk flange 58 is reduced to a narrow ring that extends exclusively parallel to the wheel axis A. The structure of such a wheel disk 51 is known in a wide variety of configurations with different depths of the U-profile of the spoke arrangements 55 and also with different numbers of ventilation holes and spoke arrangements, so the shown embodiment only forms one possible variant by way of example.

Again, in the exemplary embodiment of the vehicle wheel 50, the shape of the rim 70 is essential for understanding the invention. Insofar as elements on the rim are formed in accordance with the previous exemplary embodiment, they have been given reference numerals increased by 50; as in the previous exemplary embodiment, the rim 70 has an outer rim flange 71, an outer rim shoulder 72, a rim well 73 with a well base 74, an outer well flank 75 and an inner well flank 76, a transition section 77, an inner rim shoulder 78 and an inner rim flange 79.

A hump 82 and a hump 80 is formed both at the transition from the outer rim shoulder 72 to the outer well flank 75 and at the transition from the transition section 77 to the inner rim shoulder 78, and the rim 70 has a schematically indicated material thickness T at the transition section 77, which also could vary. According to the exemplary embodiment, the transition section 77 is reinforced in the circumferential direction by means of stiffening sections 85, namely by means of a first, inner corrugated curve 86 and a second, outer corrugated curve 87, which is located further outward therefrom. The inner corrugated curve 86 has a distance A₂ from the hump peak 81 of the inner hump 80, and the outer corrugated curve 87 has a distance A₃ from the peak of the corrugated curve 86. The two corrugated curves 86, 87 form stiffening sections for the transition section 77 and subdivide the transition section 77 into a section 77A on the well side and a relatively short bridging section 77B between the inner corrugated curve 86 and the hump peak 81 of the inner hump 80; in addition between the two corrugated curves 86, 87 there is formed a third corrugated curve 88, which can be formed by a corrugated curve of similar extent as the corrugated curves 86, 87 as shown. However, the third corrugated curve could also comprise a short straight section between two radii of curvature.

In the exemplary embodiment shown, the corrugation peak of the inner corrugated curve 86 has an offset height H₂ and the corrugation peak of the outer corrugated curve 87 has an offset height H₃, which are equal to each other and at least twice as large as the maximum material thickness T in the local area of the section 77A on the well side of the transition section 77. The offset heights H₂, H₃ effect an inner diameter D_{H} of the corrugated curves 86, 87 forming the stiffening sections, which diameter is greater than the inner diameter D_{T} at the well 74 and smaller than the inner diameter D_{H} at the hump peak 81 of the hump 80. The offset heights H₂, H₃ of the corrugated curves 86, 87 could, however, also be different in order to influence the stiffening gain of the inherent rigidity of the rim 70 via the offset height. Likewise, the distance A₂ of the peak of the inner corrugated curve 86 from the hump peak of the hump 80 and the distance A₃ between the peak of the two corrugated curves 86, 87 can be varied in order to influence the inherent rigidity and the natural frequency. An offset in the radial direction could also be formed between the section 77A on the well side and the bridging section 77B, which leads to different diameters of these sections, in order to influence the inherent rigidity and the natural frequency.

The connection between the disk flange 58 and the rim 70 on the underside of the rim well base 24 is achieved by means of several weld seams or via a friction weld. In the front view of the vehicle wheel 50, as Fig. 4 and Fig. 5 clearly show, the wheel disk 51 is almost completely visible except a partial section of the disk flange 58; of the rim 70, only the outer well flank 75 provided with a valve hole 90, the outer rim shoulder 72 and the outer rim flange 71 are visible, due to the connection of the wheel disk 51 to the rim well.

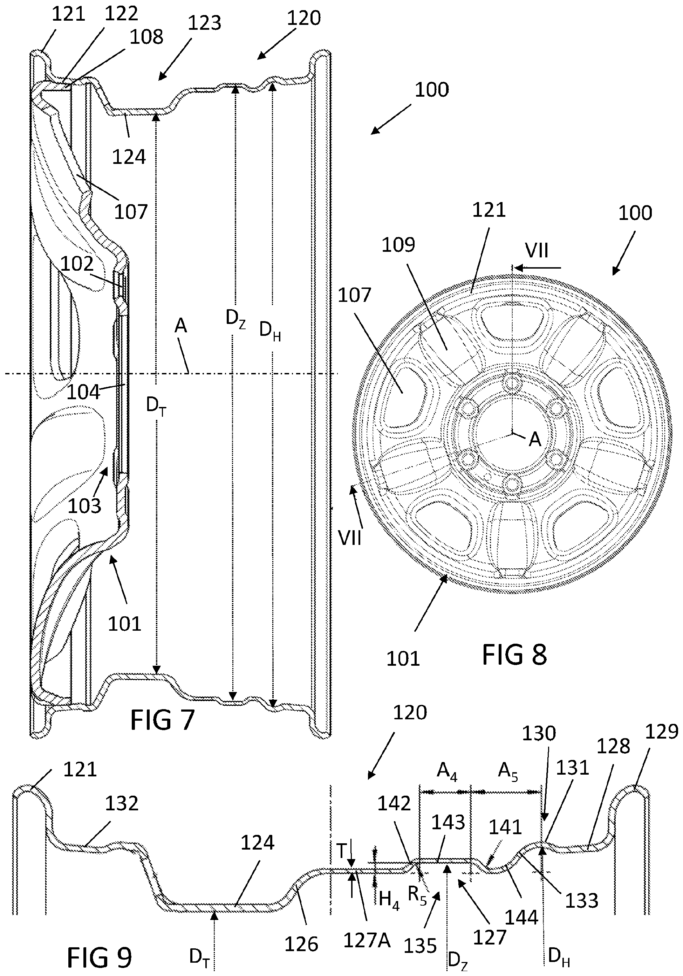

In Fig. 7 and 8, a vehicle wheel according to the invention as a whole is designated by reference numeral 100. The wheel disk 101 used in the vehicle wheel 100 is connected with its disk edge 108 not to the rim well base 124 of the well 123 but to the underside of the outer rim shoulder 122, in particular welded on. The vehicle wheel 100 therefore has in the front view, as can be seen particularly well in Fig. 8, the construction principle of a semi-full-face wheel and in the front view only the outer rim 121 and the entire disk contour of the wheel disk 101 are visible. The wheel disk 101 preferably consists of a cast part of light metal, but otherwise, as in the previous exemplary embodiment, has essentially the same functional elements, namely a hub connection flange 103 with a central hole 104 and here again with five bolt holes 102, but otherwise an almost continuously forward or outward disk contour protruding from the hub connection flange 103 to the disk flange 108, in which alternately five ventilation holes 107 and five strut elements 109 formed by bulges are formed. The ventilation holes 107 are set back inward in the disk contour relative to the strut elements 109.

The rim 120 connected to the wheel disk 101 is, as can be seen particularly well in the detailed view in Fig. 9, flow-formed here over its longitudinal extension and has for example a different material thickness on the well base 124 than on the outer rim shoulder 122, on the rim flanges 121, 129 or on the inner rim shoulder 128. The lowest material thickness T is given to the rim 120 in the transition section 127 between the inner well flank 126 and the hump flank 133 of the hump 130 on the inner rim shoulder 128. The material thickness T in the transition section 127 is largely constant in the exemplary embodiment shown. In order to ensure sufficiently high rigidity despite the material thinning in the transition section 127, the transition section is provided with a stiffening section 135 formed as a box profile, wherein the box profile of the stiffening section 135 is achieved by means of an inner offset section 141 that runs concentrically in the circumferential direction, an outer offset section 142 that runs concentrically in the circumferential direction, as well as an intermediate section 143 that runs concentrically in the circumferential direction, which were introduced into the rim contour during flow-forming in an additional profiling step. The intermediate section 143 is offset radially outward by means of the two offset sections 141, 142 and, as a result, has a larger diameter D_{z} than the section 127A of the transition section 127 on the well base side immediately adjacent to the inner well flank 126. The radial offset height H₄ of the intermediate section 143 relative to the section 127A is more than three times as great as the material thickness T in the section 127A of the transition section 127. The axial longitudinal extent A₄ of the intermediate section 143 is less than the distance As between the hump peak 131 of the hump 130 and the transition point of the inner offset section 142 into the intermediate section 143. The radii of curvature R₅ of the two offset sections 141, 142 are equal to each other, and the offset section 143 extends axially parallel to the wheel axis (A, FIG. 8). The inner offset section 141 merges into the hump flank 133 via a curved section 144. The curved section 144 is formed in such a way that the rim is locally partially restored to the diameter as at the section 127A of the transition section 127. As with the previous exemplary embodiments, the diameter at the well 124 is designated as D_{T} and the diameter at the peak of the hump 130 is designated as D_{H}. Here, too, the distances A₄, A₅ and the offset height H₄ can be adapted as a function of the wheel size, wheel load and material thickness, in order to influence the inherent rigidity and natural frequency of the rim 120 and thus of the entire vehicle wheel 100.

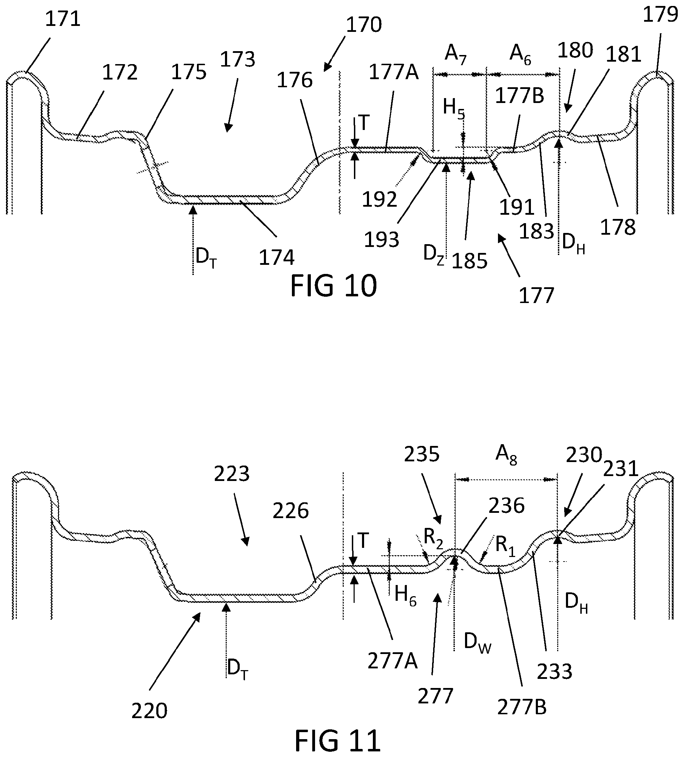

Fig. 10 shows a rim profile 170 according to a another inventive variant. As in all exemplary embodiments, the rim profile 170 alsc has an outer rim flange 171, an outer rim shoulder 172, a rim well 173 with an outer well flank 175, well base 174 and inner well flank 176, to which a transition section 127 adjoins, in which the rim 170 obtains a material thickness reduction of the material thickness T to a minimum thickness when profiling. The transition section 177 merges via the hump flank 183 into the hump 180 on the inner rim shoulder 128 and then into the inner rim flange 179. Here, too, the transition section 177 is provided with a stiffening section 185 which, as in the previous exemplary embodiment, is formed as a box profile with an inner offset section 191, an outer offset section 192 and an intermediate section 193, each of which is concentric in the circumferential direction. The two offset sections 191, 192, however, ensure a negative offset of the intermediate section 193 radially inward, which is why the rim 170 has a smaller diameter D_{z} at the intermediate section 193 than at the section 177A of the transition section 177. The offset height Hs of the intermediate section radially inwards is again several times greater than the material thickness T at section 177A. A bridging portion 177B is formed between the inner offset portion 191 and the hump peak 181, which has essentially the same diameter as the section 177A. The distance A₆ between the peak 181 of the hump 180 and the transition point of the inner offset section 191 into the intermediate section 193 is greater than the axial length A₇ of the intermediate section 193.

Fig. 11 shows a rim profile 220 with a rim contour which is formed similar to the rim contour according to Fig. 3. Here too, even though this is not shown in detail, the transition section 227 between the inner well flank 226 and the peak 231 of the inner hump 230 is provided with a material thickness T that is smaller than the material thickness for example in the area of the rim well 223, and to compensate for rigidity despite the material thickness reduction provided locally in the rim, in particular in its transition section, the transition section 227 is provided with a stiffening section 235 formed by means of a corrugated curve 236 with a corrugated curve profile. In contrast to the exemplary embodiment of the rim profile according to Fig. 3, the corrugated curve 236 curves radially outward, thus forms a positive expansion, whereby a concentrically encircling corrugated curve is created, at which the diameter D_{w} of the rim is greater than, for example, in the adjacent area of section 227A of the transition section 227. A bridging section 277B is formed between the corrugated curve 236 and the hump flank 233. The offset height H₆ of the crest of the corrugated curve 236 relative to the section 277A is again several times greater than the material thickness T in this section 277A, but the crest height is smaller than the crest of the hump 230. The length between the peak of the corrugated curve 236 and the peak of the hump 230 is indicated with A₈ and can, just like the offset height and material thickness, be varied in order to influence the inherent rigidity and the natural angular frequency.

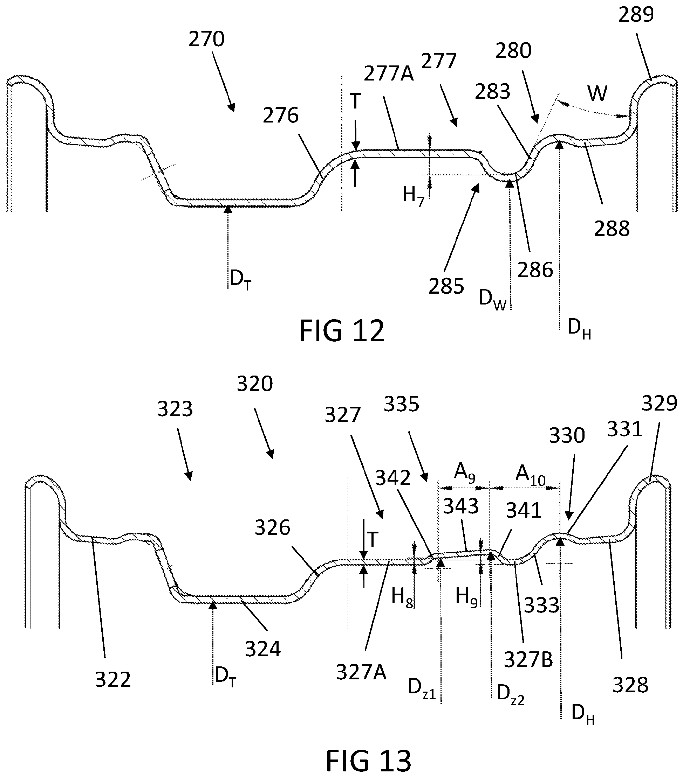

Fig. 12 shows yet another exemplary embodiment of a rim 270 with a structure similar to that in the exemplary embodiment according to Fig. 3. The transition section 277 of the rim 270 differs from the exemplary embodiment according to Fig. 3 in the size and position of the stiffening section 285 again formed by a corrugated curve 286. The section 277A of the transition section 277 directly adjoining the inner well flank 276 extends axially parallel and with a minimum material thickness T up to the entry curve of the inwardly bent peak of the corrugated curve 286. The corrugated curve 286 is formed to run concentrically and, at the peak of the corrugated curve 286, the transition section 277 has a significantly smaller inner diameter than at the section 277A of the transition section 277. The inner entry curve of the corrugated curve 286 merges directly into the hump flank 283 of the inner hump 280, whereby an angle W is established between the radially extending inner flank 289' of the rim flange 289 and the orientation of the hump flank 283. The offset height H₇ on the corrugated curve 286 here is at least four times as great as the minimum material thickness T on the section 277A.

Fig. 13 shows a further modified embodiment of a rim 320 with a stiffening section 335 in the transition section 327 formed as a box profile. It is also indicated in Fig. 13 that the material thickness T in the transition section 327 is less than, for example, on the rim well 324. The material thickness can already decrease in the area of the inner well flank 326, or only at the beginning of the section 327A of the transition section 327 directly adjoining the inner well flank 326, extending axially parallel to the wheel axis. The stiffening section 335 has, similar to the exemplary embodiments according to Fig. 9 or Fig. 10, an inner offset section 341 and an outer offset section 342, between which an intermediate section 343, also straight in the exemplary embodiment shown, extends. In the area of the outer offset section 342 there is only a small radial offset height H₈ which, in the exemplary embodiment shown, is initially locally smaller than the material thickness T; towards the inner offset section 141, the radial offset height of the intermediate section 343 increases steadily and increases to the maximum radial offset height H₉; correspondingly different diameters D_{Z1} or D_{Z2} for the intermediate portion 343 of the box-profile stiffening portion 335 near the two offset portions 141, 342 result hereby, and a conical intermediate portion 343 on the rim results hereby. At least in the area of the maximum offset H₉, the offset is greater than the material thickness T in section 327A. Between the inner offset section 341 and the hump flank 333, the transition section 327 forms a bridging section 327B, which returns essentially to the same radial height or the same diameter as in the area of the section 327A of the transition section 327. The bridging section 327B is curved here with larger angles of curvature than, for example, the inner offset section 341. The bridging section 327B has a greater axial extent A10 than the axial length A9 of the intermediate section 343. The hump flank 333 in turn then merges via the hump 330 into the inner rim shoulder 328 and then into the inner rim flange 329.

The invention is not limited to the exemplary embodiments in the drawings. The drawings show only by way of example vehicle wheels with a specific rim profile and a specific configuration of the wheel disk or wheel disk. The invention in only limited within the scope of the appended claims.

## Claims

1. A rim for a vehicle wheel, having an inner rim flange (29), an outer rim flange (21), an inner rim shoulder (28), an outer rim shoulder (22), a rim well (23) with a well base (24), an inner well flank (26) and an outer well flank (24) between the rim shoulders (28, 22), the rim having a transition section (27) adjoining the inner well flank (26) and an inner hump (30) with a hump peak between the transition section (27) and the inner rim shoulder (28), which are rotationally symmetrical around a wheel axis, wherein the rim is having a material thickness (T) in the area of the transition section (27), wherein the transition section (27) comprises at least one rotationally symmetrical stiffening section (35) with a radially offset wall section, wherein the maximum radial offset (H₁) of the wall section to the adjoining area of the transition section (27) is greater than the material thickness (T) in the area of the transition section (27), and wherein the stiffening section (35) has a diameter (D_{z}, D_{w}) over its entire axial extent, which is equal to or greater than the diameter (D_{T}) on the well base (24) and smaller than the diameter (D_{H}) of the hump peak (31) of the hump (30), **characterized in that** the stiffening section (135; 185) forms a box profile with an inner offset section (141; 191), an outer offset section (142; 192) and an intermediate section (143; 193), wherein the intermediate section (143; 193) extends in a straight line between the two offset sections.

2. The rim according to claim 1, **characterized in that** the intermediate section (143; 193) runs axially parallel to the wheel axis (A) over its entire axial length.

3. The rim according to claim 1 or 2, **characterized in that** the radial offset (H₄, H₅) of the intermediate section is 2 to 15 times, preferably 3 to 8 times, as great as the wall thickness (T) in the transition section (227).

4. The rim according to claim 1, **characterized in that** the intermediate section (343) is angled to the wheel axis (A), in particular runs straight and angled to the wheel axis (A), wherein the radial offset (H) of the intermediate section (343) is at least partially, preferably along the entire axial extent of the intermediate section, 2 times to 15 times, preferably 3 to 8 times, as great as the wall thickness (T) in the transition section (327).

5. The rim according to one of claims 1 to 4, **characterized in that** the intermediate section (193) lies radially further inward than the remaining section of the transition section, or that the intermediate section (143; 333) lies radially further outward than the remaining area of the transition section, and/or that the intermediate section has an axial length which is smaller than the axial distance between the hump peak and a transition point between the intermediate section and the inner offset section.

6. The rim according to one of claims 1 to 5, **characterized in that** at least one of the stiffening sections (35; 85; 235; 285) has a corrugated curve profile with at least one corrugation peak.

7. The rim according to claim 6, **characterized in that** at least one corrugation peak (286) is formed adjacent to the hump and preferably merges directly into a hump flank with one peak flank.

8. The rim according to claim 6, **characterized in that** at least one corrugation peak is spaced from the hump and is positioned between the stiffening section formed by means of the corrugated curve profile and a bridging section merging into the hump.

9. The rim according to claim 8, **characterized in that** the bridging section (277B) has essentially the same diameter as the section (277A) of the transition section on the well base side, or that the bridging section has a larger diameter than the area of the transition section on the well base side.

10. The rim according to one of claims 6 to 9, **characterized in that** at least one corrugation peak has a radial offset relative to the adjacent areas of the transition section, which is greater than the radial elevation of the hump peak relative to the inner rim shoulder.

11. The rim according to one of claims 6 to 10, **characterized in that** the stiffening section has several corrugation peaks, and preferably has 3 corrugation peaks, wherein at least one corrugation peak lying closer to the inner rim flange has a smaller radial offset than a corrugation peak lying closer to the well base.

12. The rim according to one of claims 6 to 11, **characterized in that** the radial offset of each corrugation peak relative to a section of the transition section on the well base side is 2 to 15 times, preferably 3 to 8 times, as great as the wall thickness in the transition section.

13. The rim according to one of claims 1 to 12, **characterized in that** the rim is made of metal, wherein the rim is optionally made of light metal and is manufactured in a casting process and/or by means of forming, or wherein the rim is made of steel and is manufactured by means of forming, in particular partial flow forming of a steel blank, and/or that the rim has a plurality of stiffening sections at the transition section.

14. A vehicle wheel having a metallic rim with an inner rim flange (21) and an outer rim flange (29), an inner rim shoulder (28) and an outer rim shoulder (22) and a rim well (23) with a well base (24), an inner well flank (26) and an outer well flank (25) between the rim shoulders (22; 28), with a transition section (27) adjoining the inner well flank (26), with an inner hump (30) with a hump peak (31) between the transition section (27) and the inner rim shoulder (28), which are rotationally symmetrical around a wheel axis (A), and with a material thickness (T) in the area of the transition section, and having a metallic wheel disk (1; 51; 101) arranged inside the rim, connected to the rim, which disk has a hub connection flange (3) with several bolt holes (5) arranged on a hole circle around a wheel axle, a transition area provided with ventilation holes (7) and a disk edge (8), wherein the hub connection flange, the transition area and the outer rim flange form a wheel front side, **characterized in that** the rim (20; 70; 120; 170; 220; 270) is formed according to one of claims 1 to 13.

## Patentansprüche

1. Felge für ein Fahrzeugrad, mit einem inneren Felgenhorn (29) und einem äußeren Felgenhorn (21), einer inneren Felgenschulter (28) und einer äußeren Felgenschulter (22) sowie einem Felgentiefbett (23) mit Tiefbettboden (24), innerer Bettflanke (26) und äußerer Bettflanke (24) zwischen den Felgenschultern (28, 22), mit einem an die innere Bettflanke (26) anschließenden Übergangsabschnitt (27) und mit einem inneren Hump (30) mit Humpscheitel zwischen Übergangsabschnitt (27) und innerer Felgenschulter (28), die rotationssymetrisch um eine Radachse herum ausgebildet sind, und mit einer Materialdicke (T) im Bereich des Übergangsabschnitts (27), wobei der Übergangsabschnitt (27) wenigstens einen rotationssymmetrisch ausgebildeten Versteifungsabschnitt (35) mit einem radial versetzten Wandabschnitt aufweist, wobei der maximale radiale Versatz (H₁) des Wandabschnitts zum angrenzenden Bereich des Übergangsabschnitts (27) größer ist als die Materialdicke (T) im Bereich des Übergangsabschnitts (27), und wobei der Versteifungsabschnitt (35) über seine gesamte axiale Erstreckung einen Durchmesser (D_{z}, D_{w}) aufweist, der gleich groß oder größer als der Durchmesser (D_{T}) am Tiefbettboden (24) und kleiner ist als der Durchmesser (D_{H}) des Humpscheitels (31) des Humps (30), **dadurch gekennzeichnet, dass** der Versteifungsabschnitt (135; 185) ein Kastenprofil mit einem inneren Versatzabschnitt (141; 191), einem äußeren Versatzabschnitt (142; 192) und einem Zwischenabschnitt (143; 193) bildet, wobei sich der Zwischenabschnitt (143; 193) geradlinig zwischen den beiden Versatzabschnitten erstreckt.

2. Felge nach Anspruch 1, **dadurch gekennzeichnet, dass** der Zwischenabschnitt (143; 193) über seine gesamte axiale Länge achsparallel zur Radachse (A) verläuft.

3. Felge nach Anspruch 1 oder 2, **dadurch gekennzeichnet, dass** der radiale Versatz (H₄, H₅) des Zwischenabschnitts 2-mal bis 15-mal, vorzugsweise 3- bis 8-mal, so groß ist wie die Wanddicke (T) im Übergangsabschnitt (227).

4. Felge nach Anspruch 1, **dadurch gekennzeichnet, dass** der Zwischenabschnitt (343) gewinkelt zur Radachse (A), insbesondere geradlinig und gewinkelt zur Radachse (A), verläuft, wobei der radiale Versatz (H) des Zwischenabschnitts (343) zumindest partiell, vorzugsweise entlang der gesamten Axialerstreckung des Zwischenabschnitts, 2-mal bis 15-mal, vorzugsweise 3- bis 8-mal, so groß ist wie die Wanddicke (T) im Übergangsabschnitt (327).

5. Felge nach einem der Ansprüche 1 bis 4, **dadurch gekennzeichnet, dass** der Zwischenabschnitt (193) radial weiter innen liegt als der verbleibende Abschnitt des Übergangsabschnitts, oder dass der Zwischenabschnitt (143; 333) radial weiter außen liegt als der verbleibende Bereich des Übergangsabschnitts, und/oder dass der Zwischenabschnitt eine axiale Länge aufweist, die kleiner ist als der Axialabstand zwischen Humpscheitel und einer Übergangstelle zwischen Zwischenabschnitt und innerem Versatzabschnitt.

6. Felge nach einem der Ansprüche 1 bis 5, **dadurch gekennzeichnet, dass** zumindest einer der Versteifungsabschnitte (35; 85; 235; 285) ein Wellenbogenprofil mit wenigstens einem Wellenscheitel aufweist.

7. Felge nach Anspruch 6, **dadurch gekennzeichnet, dass** wenigstens ein Wellenscheitel (286) angrenzend an den Hump ausgebildet und vorzugsweise mit einer Scheitelflanke unmittelbar in eine Umpflanze übergeht

8. Felge nach Anspruch 6, **dadurch gekennzeichnet, dass** wenigstens ein Wellenscheitel beabstandet vom Hump ausgebildet ist und zwischen dem mittels des Wellenbogenprofils gebildeten Versteifungsabschnitt und einem in den Hump übergehenden Überbrückungsabschnitt positioniert ist.

9. Felge nach Anspruch 8, **dadurch gekennzeichnet, dass** der Überbrückungsabschnitt (277B) im Wesentlichen denselben Durchmesser aufweist wie der tiefbettbodenseitige Abschnitt (277A) des Übergangsabschnitts, oder dass der der Überbrückungsabschnitt einen größeren Durchmesser aufweist als der tiefbettbodenseitige Bereich des Übergangsabschnitts.

10. Felge nach einem der Ansprüche 6 bis 9, **dadurch gekennzeichnet, dass** wenigstens ein Wellenscheitel einen radialen Versatz relativ zu den angrenzenden Bereichen des Übergangsabschnitts aufweist, der größer ist als die radiale Erhebung des Humpscheitels relativ zur inneren Felgenschulter.

11. Felge nach einem der Ansprüche 6 bis 10, **dadurch gekennzeichnet, dass** der Versteifungsabschnitt mehrere Wellenscheitel aufweist, und vorzugsweise 3 Wellenscheitel aufweist, wobei wenigstens ein näher am inneren Felgenhorn liegender Wellenscheitel einen geringeren radialen Versatz aufweist als ein näher am Tiefbettboden liegender Wellenscheitel.

12. Felge nach einem der Ansprüche 6 bis 11, **dadurch gekennzeichnet, dass** der radiale Versatz jedes Wellenscheitels relativ zu einem tiefbettbodenseitigen Abschnitts des Übergangsabschnitt 2- bis 15-mal, vorzugsweise 3- bis 8-mal, so groß ist wie die Wanddicke im Übergangsabschnitt.

13. Felge nach einem der Ansprüche 1 bis 12, **dadurch gekennzeichnet, dass** die Felge aus Metall besteht, wobei wahlweise die Felge aus Leichtmetall besteht und in einem Gussverfahren und/oder mittels Umformen hergestellt ist, oder wobei die Felge aus Stahl besteht und mittels Umformen, insbesondere partielles Flowformen eines Stahlrohlings, hergestellt ist, und/oder dass die Felge am Übergangsabschnitt mehrere Versteifungsabschnitte aufweist.

14. Fahrzeugrad aufweisend eine metallische Felge mit einem inneren Felgenhorn (21) und einem äußeren Felgenhorn (29), einer inneren Felgenschulter (28) und einer äußeren Felgenschulter (22) sowie einem Felgentiefbett (23) mit Tiefbettboden (24), innerer Bettflanke (26) und äußerer Bettflanke (25) zwischen den Felgenschultern (22; 28), mit einem an die innere Bettflanke (26) anschließenden Übergangsabschnitt (27), mit einem inneren Hump (30) mit Humpscheitel (31) zwischen Übergangsabschnitt (27) und innerer Felgenschulter (28), die rotationssymetrisch um eine Radachse (A) herum ausgebildet sind, und mit einer Materialdicke (T) im Bereich des Übergangsabschnitts, und aufweisend eine im Innern der Felge angeordnete, an die Felge angeschlossene metallische Radschüssel (1; 51; 101), die einen Nabenanschlussflansch (3) mit mehreren auf einem Lochkreis um eine Radachse herum angeordneten Bolzenlöchern (5), einen mit Lüftungslöchern (7) versehenen Übergangsbereich und einen Schüsselrand aufweist (8), wobei der Nabenanschlussflansch, der Übergangsbereich und das äußere Felgenhorn eine Radvorderseite bilden, **dadurch gekennzeichnet, dass** die Felge (20; 70; 120; 170; 220; 270) gemäß einem der Ansprüche 1 bis 13 ausgebildet ist.

## Revendications

1. Jante pour une roue de véhicule, ayant une joue de jante intérieure (29), une joue de jante extérieure (21), un épaulement de jante intérieur (28), un épaulement de jante extérieur (22), une gorge de jante (23) avec une base de gorge (24), un flanc de gorge intérieur (26) et un flanc de gorge extérieur (24) entre les épaulements de jante (28, 22), la jante ayant une section de transition (27) contiguë au flanc de gorge intérieur (26) et un bourrelet intérieur (30) avec un sommet de bourrelet entre la section de transition (27) et l'épaulement de jante intérieur (28), qui sont en symétrie de révolution autour d'un axe de roue, la jante ayant une épaisseur de matière (T) dans la région de la section de transition (27), la section de transition (27) comprenant au moins une section de raidissement (35) en symétrie de révolution, avec une section de paroi décalée radialement, le décalage radial maximal (H₁) de la section de paroi par rapport à la région adjacente de la section de transition (27) étant supérieur à l'épaisseur de matière (T) dans la région de la section de transition (27), et la section de raidissement (35) ayant un diamètre (D_{Z}, D_{W}) sur toute son étendue axiale, qui est égal ou supérieur au diamètre (D_{T}) au niveau de la base de gorge (24) et inférieur au diamètre (D_{H}) du sommet de bourrelet (31) du bourrelet (30), **caractérisée en ce que** la section de raidissement (135 ; 185) forme un profil parallélépipédique avec une section de décalage intérieure (141 ; 191), une section de décalage extérieure (142 ; 192) et une section intermédiaire (143 ; 193), la section intermédiaire (143 ; 193) s'étendant en ligne droite entre les deux sections de décalage.

2. Jante selon la revendication 1, **caractérisée en ce que** la section intermédiaire (143 ; 193) s'étend axialement parallèlement à l'axe de roue (A) sur toute sa longueur axiale.

3. Jante selon la revendication 1 ou 2, **caractérisée en ce que** le décalage radial (H₄, H₅) de la section intermédiaire est 2 à 15 fois, de préférence 3 à 8 fois, plus grand que l'épaisseur de paroi (T) dans la section de transition (227).

4. Jante selon la revendication 1, **caractérisée en ce que** la section intermédiaire (343) est oblique par rapport à l'axe de roue (A), en particulier droite et oblique par rapport à l'axe de roue (A), le décalage radial (H) de la section intermédiaire (343) étant au moins partiellement, de préférence sur toute l'étendue axiale de la section intermédiaire, 2 à 15 fois, de préférence 3 à 8 fois, plus grand que l'épaisseur de paroi (T) dans la section de transition (327).

5. Jante selon l'une des revendications 1 à 4, **caractérisée en ce que** la section intermédiaire (193) se trouve radialement plus à l'intérieur que la section restante de la section de transition, ou **en ce que** la section intermédiaire (143 ; 333) se trouve radialement plus à l'extérieur que la région restante de la section de transition, et/ou **en ce que** la section intermédiaire a une longueur axiale qui est inférieure à la distance axiale entre le sommet de bourrelet et un point de transition entre la section intermédiaire et la section de décalage intérieure.

6. Jante selon l'une des revendications 1 à 5, **caractérisée en ce qu'**au moins l'une des sections de raidissement (35 ; 85 ; 235 ; 285) présente un profil courbe ondulé avec au moins une crête d'ondulation.

7. Jante selon la revendication 6, **caractérisée en ce qu'**au moins une crête d'ondulation (286) est formée à côté du bourrelet et se prolonge de préférence directement par un flanc de bourrelet avec un flanc de crête.

8. Jante selon la revendication 6, **caractérisée en ce qu'**au moins une crête d'ondulation est espacée du bourrelet et est positionnée entre la section de raidissement formée au moyen du profil courbe ondulé et une section de raccordement se prolongeant par le bourrelet.

9. Jante selon la revendication 8, **caractérisée en ce que** la section de raccordement (277B) a sensiblement le même diamètre que la section (277A) de la section de transition côté base de gorge, ou **en ce que** la section de raccordement a un diamètre plus grand que la région de la section de transition côté base de gorge.

10. Jante selon l'une des revendications 6 à 9, **caractérisée en ce qu'**au moins une crête d'ondulation présente un décalage radial par rapport aux régions voisines de la section de transition, qui est supérieur à l'élévation radiale du sommet de bourrelet par rapport à l'épaulement de jante intérieur.

11. Jante selon l'une des revendications 6 à 10, **caractérisée en ce que** la section de raidissement présente plusieurs crêtes d'ondulation, et de préférence 3 crêtes d'ondulation, au moins une crête d'ondulation située plus près de la joue de jante intérieure présentant un plus petit décalage radial qu'une crête d'ondulation située plus près de la base de gorge.

12. Jante selon l'une des revendications 6 à 11, **caractérisée en ce que** le décalage radial de chaque crête d'ondulation par rapport à une section de la section de transition côté base de gorge est 2 à 15 fois, de préférence 3 à 8 fois, plus grand que l'épaisseur de paroi dans la section de transition.

13. Jante selon l'une des revendications 1 à 12, **caractérisée en ce que** la jante est en métal, la jante étant éventuellement en métal léger et fabriquée par coulée et/ou par formage, ou la jante étant en acier et fabriquée par formage, en particulier par fluotournage partiel d'une ébauche en acier, et/ou **en ce que** la jante présente plusieurs sections de raidissement au niveau de la section de transition.

14. Roue de véhicule comportant une jante métallique avec une joue de jante intérieure (21) et une joue de jante extérieure (29), un épaulement de jante intérieur (28) et un épaulement de jante extérieur (22), et une gorge de jante (23) avec une base de gorge (24), un flanc de gorge intérieur (26) et un flanc de gorge extérieur (25) entre les épaulements de jante (22 ; 28), avec une section de transition (27) contiguë au flanc de gorge intérieur (26), avec un bourrelet intérieur (30) avec un sommet de bourrelet (31) entre la section de transition (27) et l'épaulement de jante intérieur (28), qui sont en symétrie de révolution autour d'un axe de roue (A), et avec une épaisseur de matière (T) dans la région de la section de transition, et comportant un disque de roue métallique (1 ; 51 ; 101) disposé à l'intérieur de la jante et relié à la jante, ledit disque présentant une saillie de raccordement au moyeu (3) avec plusieurs trous de boulon (5) disposés sur un cercle de trous autour d'un axe de roue, une région de transition pourvue de trous de ventilation (7) et un bord de disque (8), la saillie de raccordement au moyeu, la région de transition et la joue de jante extérieure formant une face avant de roue, **caractérisée en ce que** la jante (20 ; 70 ; 120 ; 170 ; 220 ; 270) est formée selon l'une des revendications 1 à 13.
